# EUROPEAN PATENT SPECIFICATION

(11) **EP 1 165 715 B1**
(45) Date of publication and mention of the grant of the patent: **24.09.2003**
(21) Application number: 00904127.8
(22) Date of filing: 02.02.2000
(51) Int. Cl.: C09J 7/02, G09F 3/02

(54) **LABEL LAMINATE**
ETIKETTMEHRSCHICHTENVERBUND
LAMINE POUR ETIQUETTES

(30) Priority: 02.02.1999 EP 99200272
(43) Date of publication of application: 02.01.2002
(73) Proprietor: AVERY DENNISON CORPORATION, Pasadena, California 91103 (US)
(72) Inventor: VAN DRIESTEN, Sjoerd, NL-2300 AA Leiden (NL); ARNAUD, Francis, /// (FR)
(74) Representative: De Hoop, Eric
(86) International application number: NL0000065
(87) International publication number: WO00046316

(56) References cited:
- US-A- 3 464 842
- US-A- 4 818 610
- US-A- 4 894 259
- US-A- 5 558 913

## Description

### TECHNICAL FIELD

The present invention relates to a dry peel label laminate comprising a face construct, a dry peel adhesive layer and a liner construct, successively, wherein said face construct comprises a face layer and a pressure sensitive adhesive (PSA) layer, said liner construct comprises a liner layer and said dry peel adhesive layer is a non-PSA layer. When the face construct is peeled off two non-sticky surfaces are revealed which are dry to the touch. Such label laminate and such delamination will hereinafter be referred to as dry peel label laminate and dry peel delamination, respectively.

Dry peel label laminates may generally be used in the manufacturing of dry tags, coupons, hanger labels, auto collar labels, exhibition or seminar cards, membership cards, leaflets, booklets, labels containing advertising messages, single labels, labels containing games, labels containing confidential information and business cards.

### STATE OF THE ART

A general advantage of dry peel label laminates is that they can be converted. Converting comprises die cutting the geometry of the face layer into the form of labels, the remaining part of the face layer being known as a matrix, by using label laminate rolls which are better to handle, i.e. in terms of product quality and process speed, than stacks of label laminate sheets.

After converting it is possible to remove the matrix and to leave the labels on the liner layer.

Finally, the labels may (i) be removed from the liner layer leaving two non-sticky surfaces, or (ii) be dispensed on a substrate and subsequently be removed from that substrate leaving two non-sticky surfaces.

In the former case the labels are derived from a single ply label laminate. In the latter case the labels to be dispensed on a substrate are derived from a double ply label laminate (or piggyback label laminate). The latter labels are conventionally called self-adhesive labels. An example of self-adhesive labels is a coupon which may be applied on a bottle after peeling it from a double ply label laminate. Subsequently, the coupon may be peeled from the bottle. Coupons are normally used in stores to get discounts or as a means for carrying information in a warehouse logistics system.

Making a dry peel label laminate is not easy since (i) a face construct (i.e. the label part) and a liner construct (i.e. the label supporting part) need to be bonded, (ii) the bond between the face construct and the liner construct must not be too tight for peeling of these constructs to be effective and (iii) after said peeling, i.e. after delamination, the constructs must have non-sticky surfaces which are dry to the touch.

In recent years various proposals to solve the difficulties mentioned above have been made.

For example, one type of dry peel label laminate, manufactured by Avery Dennison Corporation France and commercially available as DRYTAG (FASSON branded) or PRESTAG (PRESTO branded), and comprising a face layer, a PSA layer, a polyethylene layer, a polyurethane layer, a PSA layer, a silicone release coating layer and a liner layer, successively, has dry peel characteristics. The silicone release coating layer and the liner layer of this double ply label laminate may be removed and subsequently the dry peel label laminate may be applied on a substrate by way of its sticky PSA layer. Then, upon peeling dry peel delamination takes place between the polyethylene layer and the polyurethane layer leaving two non-sticky revealing surfaces. However, a disadvantage of this dry peel label laminate is that the release force between the polyethylene layer and the polyurethane layer increases over time.

US-A 4,863,772 teaches in one embodiment a dry peel label laminate that comprises a face layer, a primer layer, a PSA layer, a polyethylene layer, a liner layer and optionally a silicone release coating layer, successively. The primer layer is used as barrier to prevent staining of the face layer with PSA, i.e. migration of PSA into the face layer. Hot melt PSA is used necessitating the use of high temperatures when applying the PSA layer. The polyethylene layer is relatively thin and is applied by a coextrusion process. A silicone release coating layer may be used in order to make self-wound dry peel label laminates. Upon peeling said dry peel label laminate delamination occurs without disrupture of the liner material, between the polyethylene layer and the liner layer. In a second embodiment of US-A 4,863,772 the order of the PSA layer and the polyethylene layer of the dry peel label laminate is reversed. In both embodiments, the face or liner layer on which the polyethylene layer is coextruded comprises paper.

US-A 4,724,166 relates to the production of dry peel coupons. Said coupons are composed of a first pigmented layer, a face layer (paper), a second pigmented layer, a first varnish layer, a second varnish layer, a PSA layer, a release coating layer and a liner layer (paper), successively. When said coupon is peeled from a substrate to which it has first been adhered by the PSA layer dry peel delamination takes place between the two varnish layers because these layers are incompatible. When separated both varnish layers have non-sticky surfaces.

GB-2.200.592 relates to a method of temporary fixing of image material on a support by (i) applying a UV-curable adhesive to the support, (ii) laminating the support with the image material and (iii) curing the adhesion with UV-radiation. One may separate the support and image material without leaving a sticky side on either the image material or the support.

EP 0,690,794 discloses in one embodiment (see FIG. 3 of said European patent application) a single ply label laminate comprising a coating layer **41**, a permanent adhesive layer **42**, a form **1**, a permanent adhesive layer **24**, a coating layer **23**, a peeling adhesive **22** which is a two layer construct comprising peeling adhesive sublayers **221** and **222**, a carrier layer **21** and a silicone release coating layer **25**, successively.

According to EP 0,690,794 the form **1** is made of paper, the carrier layer **21** may be made of paper or plastic film and the coating layers **41** and **23** are preferably made of (transparent) plastic film but may also be made of paper.

The peeling adhesive sublayer **221** comprises an adhesive which is non-permanently adhered to the coating layer **23** and the peeling adhesive sublayer **222** comprises an adhesive which is permanently adhered to the peeling adhesive sublayer **221** and to the carrier layer **21**. The release force between the peeling adhesive sublayer **222** and the carrier layer **21** and the release force between the peeling adhesive sublayer **222** and the peeling adhesive sublayer **221** are greater than the release force between the coating layer **23** and the peeling adhesive sublayer **221**. Therefore, upon peeling the dry peel label laminate and detaching a card **3** (i.e. a label comprising the form **1**), delamination takes place between the coating layer **23** and the peeling adhesive sublayer **221**.

Another characteristic of the dry peel label laminate of said European patent application is that the peeling adhesive sublayer **221** is set in such a way that after the detachment of the card **3** it is practically no longer adhesive (dry peel delamination).

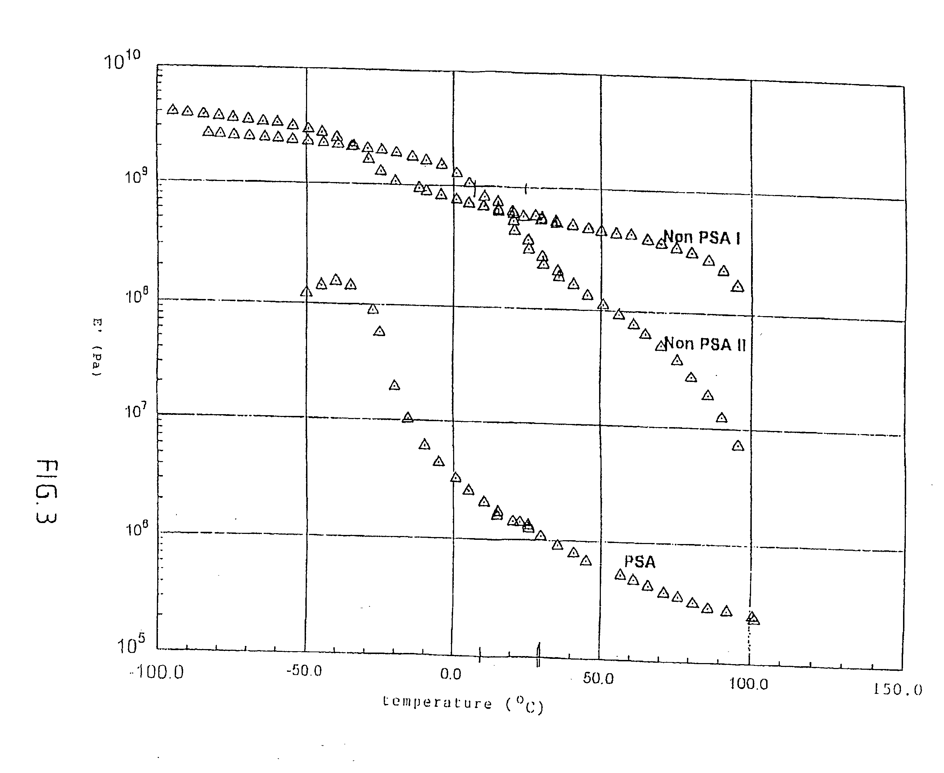

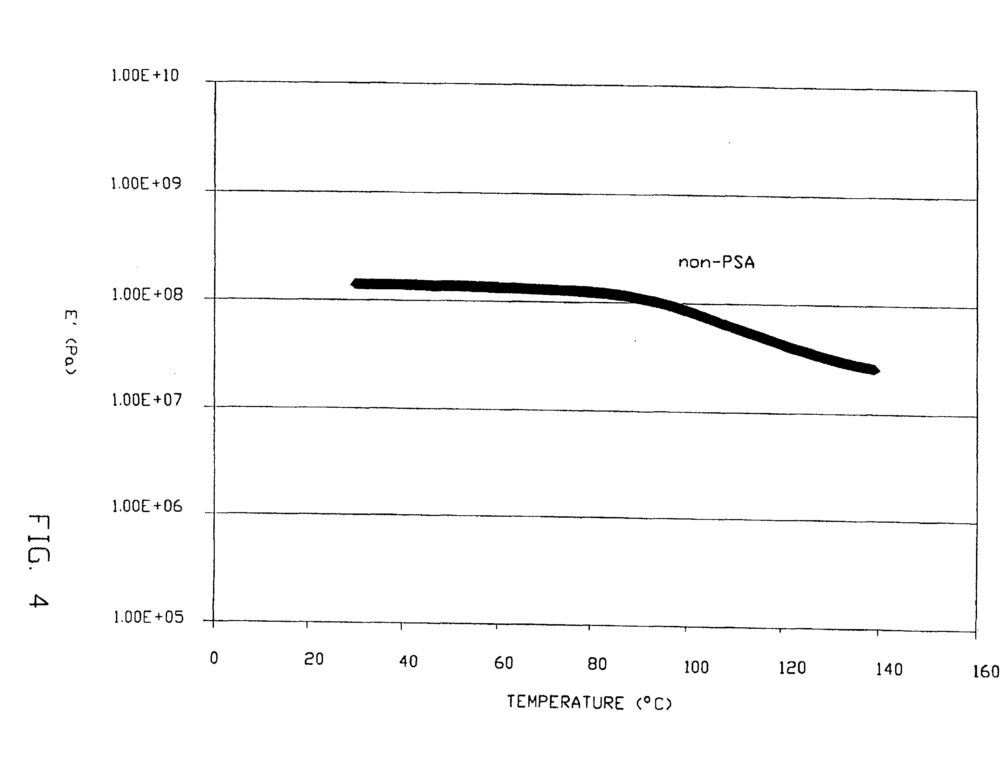

Another embodiment of EP 0,690,794 (see FIG. 4 of said European patent application) concerns a double ply label laminate which additionally, with respect to the dry peel label laminate shown in FIG. 3, comprises a release coating layer **26** between the peeling adhesive sublayer **222** and the carrier layer **21**.

The release force between the peeling adhesive sublayer **222** and the release coating layer **26** is sufficiently low for delamination to take place between these two layers upon detaching the card **3**. The card **3** may then be applied to a substrate **11** by way of its sticky peeling adhesive sublayer **222** which permanently adheres to the substrate **11.** Upon peeling the card **3** once again delamination takes place between the coating layer **23** and the peeling adhesive sublayer **221** leaving the peeling adhesive sublayers **221** and **222** on the substrate **11.**

The dry peel label laminates of the prior art described above do not have a controllable dry peel release force, i.e. the release force between two layers which both leave non-sticky revealing surfaces after delamination, may be adjusted to a value comprised within only a small range. Further, said dry peel release force is unstable over time, i.e. a long time after manufacturing of the dry peel label laminate this release force increases and accordingly delamination becomes more difficult and, additionally, upon delamination the revealing surfaces appear to be sticky. In this way the site of delamination changes, i.e. the dry peel adhesive may remain on either the face material or the liner material.

Further, the dry peel label laminate of US-A 4,863,772 is unsatisfactory as regards the restricted choice, i.e. only paper, of either the face layer or the liner layer, i.e. the layer on which the polyethylene layer is applied; the fixed release force upon delamination; the relative high price of the face or liner layers used; and the poor printability of the polyethylene layer.

Another disadvantage of the dry peel laminate of US-A 4,863,772 is the relatively small thickness of the polyethylene layer as a result of which it is hard to effect delamination. Due to this relatively small thickness of the polyethylene layer a relatively thick face layer has to be used.

Still another disadvantage is the relatively low speed of the process by which said dry peel label laminates are made. This is caused by the necessity of applying the PSA layer and the polyethylene layer in two separate process passes. Still another disadvantage is that a primer layer has to be applied between the face layer and the PSA layer.

### SUMMARY OF THE INVENTION

The aim of the present invention is to provide dry peel label laminates that are constructed in such a way that upon peeling off a face construct two non-sticky surfaces are revealed by which the problems of the prior art, i.e. the uncontrollability and the unstability over time of the dry peel release force, the inflexibility with regard to the face material, the impossibility of robust processing and the difficulty of delamination, are solved.

It has surprisingly been found that by using a non-PSA layer having a relatively high storage modulus E', such dry peel label laminates can indeed be provided.

Accordingly the present invention provides a dry peel label laminate comprising a face construct, a dry peel adhesive layer and a liner construct, successively, wherein said face construct comprises a face layer and a PSA layer, said liner construct comprises a liner layer and said dry peel adhesive layer is a non-PSA layer which contains one or more polymers and/or copolymers, and/or derivatives of said one or more polymers and/or copolymers, the storage modulus E' of which is greater than 1 x 10⁷ Pa, preferably greater than 1 x 10⁸ Pa, at a temperature in the range of 10 to 50°C. Additionally, this dry peel label laminate is a single ply label laminate.

An advantage of the dry peel label laminate of the present invention is the high controllability of the dry peel release force. This means that the dry peel release force may be adjusted to any value comprised within a broad range.

Another advantage of the dry peel label laminate of the present invention is the stability over time of the dry peel release force. This means that even a long time after manufacturing of the dry peel label laminate it can be delaminated easily to yield two non-sticky surfaces which are dry to the touch. This characteristic is advantageous for stocking the dry peel label laminate on rolls, for printing and/or writing on dry peel adhesive layers after dry peel delamination, for a high speed and quality of converting of the dry peel label laminates and even for dispensing of the dry peel label laminates.

An additional advantage of a dry peel label laminate of the present invention is that less layers are used resulting in a lower cost price of the label laminate. Moreover, such label laminate has many uses as semi-manufactured label laminate. For example, another liner construct may be applied on such label laminate at a later stage.

Still another advantage of the dry peel label laminate of the present invention is the use, apart from conventional paper face material, of plastic film face material.

Still another advantage is that the dry peel label laminate of the present invention may be made by processes conventionally used for the production of dry peel label laminates containing a PSA layer. The same reverse coating technology and drying capacity are used which means that the production speed is as high as in processes by which prior art dry peel label laminates are produced and that the processing is robust.

Still another advantage is that in the processes of making the dry peel label laminates of the present invention no primer layer has to be applied between the face layer and the PSA layer. Still another advantage is that in the embodiment of the present invention wherein the non-PSA layer contains one or more poly(meth)acrylates and/or derivatives thereof, the dry peel label laminate may be made by the wet-on-wet process by which a higher production speed may be achieved than in using the conventional wet-on-dry process.

The present invention also provides double ply label laminates and triple ply label laminates (so called piggyback label laminates), respectively, which are identical to the single ply label laminates as described above with the exception that these comprise one and two release coating layers, respectively.

The present invention will now be described with reference to the following drawings and Examples.

### BRIEF DESCRIPTION OF THE DRAWINGS

FIG. 1 is a perspective view of the basis layer construction of a dry peel label laminate which is a single ply label laminate.
FIG. 2 is a perspective view of the layer construction of a dry peel label laminate of the present invention which is a single ply label laminate.
FIG. 3 is a chart representing the rheological behaviour, i.e. the storage modulus (E') vs. temperature, of two types of non-PSA and one type of PSA which are used in the present invention.
FIG. 4 is a chart representing the rheological behaviour, i.e. the storage modulus (E') vs. temperature, of a varnish layer comprising polyurethanes which is used as a non-PSA layer in the present invention.
FIG. 5 is a perspective view of the layer construction of a single ply label laminate of the present invention.
FIG. 6 is a perspective view of the layer construction of a double ply label laminate of the present invention.
FIG. 7 is a flow chart of a process of making the label laminate as shown in FIG. 5 (wet-on-dry process).
FIG. 8 is a flow chart of another process of making the label laminate as shown in FIG. 5 (wet-on-wet process).
FIG. 9 is a perspective view of the layer construction of a single ply label laminate of the present invention.
FIG. 10 is a perspective view of the layer construction of another single ply label laminate of the present invention.
FIG. 11 is a perspective view of the layer construction of yet another single ply label laminate of the present invention.
FIG. 12 is a perspective view of the layer construction of another embodiment of the single ply label laminate as shown in FIG. 9.
FIG. 13 is a perspective view of the layer construction of a double ply label laminate of the present invention.
FIG. 14 is a perspective view of the layer construction of a triple ply label laminate of the present invention.
FIG. 15 is a perspective view of the layer construction of a double ply label laminate of the present invention.
FIG. 16 and 17 are flow charts of a process, comprising two passes, of making the single ply label laminate as shown in FIG. 9.

### DETAILED DESCRIPTION

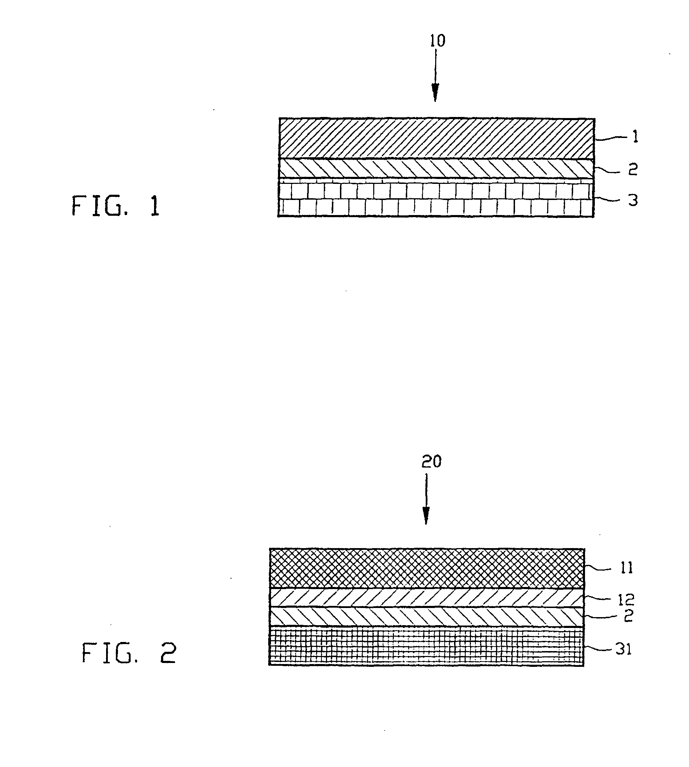

Referring now to FIG. 1 there is shown a single ply label laminate **10** comprising a face construct **1**, a dry peel adhesive layer **2** and a liner construct **3**.

Referring now to FIG. 2 there is shown a single ply label laminate **20** of the present invention comprising a face construct **1** comprising a face layer **11** and a PSA layer **12**, a non-PSA layer **2** and a liner construct **3** comprising a liner layer **31.**

The dry peel label laminates of the present invention are characterized by their non-PSA layer **2** containing one or more polymers and/or copolymers, and/or derivatives of said one or more polymers and/or copolymers, the storage modulus E' of which is greater than 1 x 10⁷ Pa, preferably greater than 1 x 10⁸ Pa, at a temperature in the range of 10 to 50°C.

Examples of such polymers having the above storage modulus E' are poly(meth)acrylates, polyesters, polypropylene, polyamides, polyurethanes, vinylic polymers, styrenebutadiene rubbers and poly(vinylhydroxy) compounds. An example of such copolymers is an acrylic/ethylenic copolymer.

Referring now to FIG. 3 there is shown a chart representing the rheological behaviour, i.e. the storage modulus (E') vs. temperature, of two types of non-PSA (used in a non-PSA layer **2**) and one type of PSA which are used in the present invention and which contain poly(meth)acrylates.

Both types of non-PSA used in the present invention have an E' at a use temperature in the range of 10 to 50°C greater than 1 x 10⁷ Pa (as shown in FIG. 3). In said temperature range the E' of the non-PSA used in the present invention is about 1000 times greater than that of the PSA used in the present invention. Typical values of E' at 23°C for the non-PSA and PSA used in the present invention are 0.5 x 10⁹ (non-PSA I), 0.3 x 10⁹ Pa (non-PSA II) and 1,4 x 10⁶ Pa (PSA).

E' is obtained from a force needed to deform PSA or non-PSA for a very short displacement, this force being temperature dependent. Deformation is effected by using oscillation at a certain frequency. The curvature for the PSA used in the present invention (as shown in FIG. 3) fully lies under the curvature for the two types of non-PSA used in the present invention. In order to deform the PSA less time and/or pressure is thus needed as compared to the deformation of the non-PSA. On the basis of the chart in FIG. 3 the rheological behaviour of different types of non-PSA may be predicted. Non-PSA II has a higher temperature dependence than non-PSA I, i.e. at temperatures higher than 50°C non-PSA II will become a little sticky to the touch.

The above non-PSAs are conventionally used in the formulation for top coating layers, e.g. flexible packaging and papers, and for binders in paints and inks. The non-PSAs may also contain pigments to achieve certain colours and/or a certain gloss. This is e.g. used to increase the opacity of the face material.

Referring now to FIG. 4 there is shown a chart representing the rheological behaviour, i.e. the storage modulus (E') vs. temperature, of a varnish layer comprising polyurethanes used as a non-PSA layer **2** in the present invention. Up to 90°C the curvature for the varnish layer lies above the line E' = 1 x 10⁸ Pa.

The non-sticking characteristic of the non-PSA used in the present invention may also be characterized by a more practical method which is called the finger pressure test. When, putting a finger at a certain pressure for a certain time, at a use temperature of 10 to 40°C, on the surface of a material to be characterized as either a non-PSA or a PSA, a lower force is needed to pull the finger back, said material may be characterized as a non-PSA.

In the following, embodiments of the dry peel label laminate **20** of the present invention will be described in more detail.

Referring now to FIG. 5 there is shown a single ply label laminate **30** of the present invention comprising a face layer **11**, a PSA layer **12**, a non-PSA layer **2**, a release coating layer **32** and a liner layer **31**. The release coating layer **32** is preferably a silicone release coating layer. The release coating layer may also be omitted.

Having converted the dry peel label laminate **30**, i.e. having cut the face layer into e.g. business cards, these business cards may be peeled from the dry peel label laminate **30** upon which dry peel delamination occurs between the non-PSA layer **2** and the silicone release coating layer **32** resulting in the revealing surfaces of both layers being non-sticky.

Either a water based emulsion of non-PSA or hot melt non-PSA may be used in the application of the non-PSA layer **2**. In the application of the PSA layer **12** either a water based emulsion of PSA or hot melt PSA may be used. An advantage of using PSA and non-PSA emulsions is the good flow property thereof.

The PSA and non-PSA emulsions used in the present invention are commercially available and comprise one or more polymers, preferably poly(meth)acrylates, and/or copolymers, and/or derivatives of these polymers and/or copolymers, auxiliaries and optionally pigments, said constituents being emulsified in water. The PSA and non-PSA emulsions containing one or more poly(meth)acrylates have preferentially the same colour and refraction index. However, the functional groups on and the molecular weights of the poly(meth)acrylates for PSA and non-PSA differ. The auxiliaries contained in the PSA and non-PSA emulsions increase the coating capacity thereof.

In applying the silicone release coating layer **32** the silicones are applied on the liner layer as either 100% solid thermosetting silicones (solventless system) or as silicones mixed with a solvent (solvent based system).

In prior art silicone release coating layers the silicone coatweight, as measured with X-ray, is conventionally 0.8 to 2.0 g/m². However, the silicone release coating layer **32** of the present invention has a silicone coatweight per surface area unit in the range of 0.01 to 2.00 g/m², preferably 0.01 to 1.00 g/m². The silicone coatweight should be kept as low as possible in order to have the non-PSA layer **2** tightly adhered to the PSA layer **12.**

The strength of the bond, i.e. the dry peel release force, between the non-PSA layer **2** and the silicone release coating layer **32** should be controllable and be stable. On the one hand this implies that the non-PSA layer **2** bonds with a certain force to the silicone release coating layer **32.** On the other hand this implies that it must still be possible to delaminate the dry peel label laminate upon which said bond will be broken. With respect to this controllable and stable dry peel release force two layer interfaces are important.

Firstly, the interface between the PSA layer **12** and the non-PSA layer **2** is important. Secondly, the interface between the non-PSA layer **2** and the silicone release coating layer **32** is important.

As far as the interface between the PSA layer **12** and the non-PSA layer **2** is concerned, these two layers have to remain separate, apart from a very small interface area where they may diffuse into each other. The extent of diffusion depends on the type of process used of making the dry peel label laminates of the present invention and on the chemical affinity of these two layers.

Afore mentioned interface between the PSA layer **12** and the non-PSA layer **2** is less important in terms of the controllability and stability of the dry peel release force than the interface between the non-PSA layer **2** and the silicone release coating layer **32** since it is this latter interface where dry peel delamination occurs. However, in case a release coating layer is absent dry peel delamination takes place between the non-PSA layer **2** and the liner layer **31**. A controllable dry peel release force may be achieved by varying the composition of the silicone release coating layer **32**. A stable dry peel release force may be achieved by the mere application of a non-PSA layer as a dry peel adhesive layer.

The composition of the silicone release coating layer **32** is very important for controlling the value of the dry peel release force. The silicone release coating layer **32** may or may not comprise a control release agent (CRA). Prior art silicone release coating layers contained CRAs in amounts up to 35 wt.%. However, the silicone release coating layer **32** of the present invention may comprise the CRA in an amount up to 100 wt.%, with respect to the silicone coatweight per surface area unit.

By varying the amount of the CRA the dry peel release force of the dry peel label laminate of the present invention may be adjusted to any value in the range of 5 cN/25 mm to 125 cN/25 mm when paper with a weight of 70 g/m² is used as liner material. These dry peel release forces are measured at a delamination velocity of 10 m/min and under a delamination angle of 180°.

The dry peel release force may also be adjusted to a value lower than 5 cN/25 mm but this is often not very useful. Dry peel release forces higher than 125 cN/25 mm are also possible but this is only useful if the face and liner materials do not break when converting, i.e. when stripping of the matrix, or when peeling off the labels. Higher dry peel release forces are needed for more bending stiff materials like paper or plastic film at high calipers. A certain dry peel release force is needed for converting which highly depends on the type of dies and the face materials used in the process of making the dry peel label laminate and on the production speed of such process.

Selecting the proper type of non-PSA, although to a lesser degree than varying the composition of the silicone release coating layer **32,** also allows one to adjust the dry peel release force to a certain value. For different liner materials non-PSAs with different T_{g} are used. For example, in case of plastic film liner material non-PSAs with a relatively high T_{g} and in case of paper liner material non-PSAs with a relatively low T_{g} are used. For developed products the T_{g} varies commonly from -35°C to 50°C.

As mentioned before, using a combination of a PSA layer and a non-PSA layer instead of solely using a PSA layer advantageously leads to a stable dry peel release force, even after accelerated ageing (at a temperature of 70°C for 1 week), because the rheological behaviour of non-PSA is far less time and temperature dependent than that of PSA.

The PSA of the PSA layer **12** ensures a strong permanent bond to the face layer **11** and contains one or more polymers, e.g. poly(meth)acrylates, and/or derivatives thereof. Conventional methods for further increasing this permanent bond, although not necessary for a good release performance of the dry peel label laminate of the present invention, may be used, such as the application of a primer layer between the face layer **11** and the PSA layer **12** or the use of surface treatment, e.g. corona treatment.

Applying a water based PSA emulsion is preferred over applying hot melt PSA. Using an emulsion prevents (i) staining of the face material, (ii) swelling of plastic film when this is used as face material and (iii) loosing of adhesive properties upon exposure to UV light.

The PSA of the PSA layer **12** has a coatweight which is comprised within the range of **1** to 20 g/m² dry weight. The thickness of the PSA layer **12** may be adjusted to the type of face material used. The thickness of the PSA layer **12** and that of the non-PSA layer **2** are preferentially the same, say about 10 micron. In case of relative bending stiff face materials, e.g. paper at high calipers, the PSA coatweight may be greater than 20 g/m² dry weight.

The face layer **11** and the liner layer **31** may be composed of either a conventional material, such as paper, or plastic film, e.g. made of a polyolefin, such as polyethylene and polypropylene, or a polyester, such as polyethylene terephthalate.

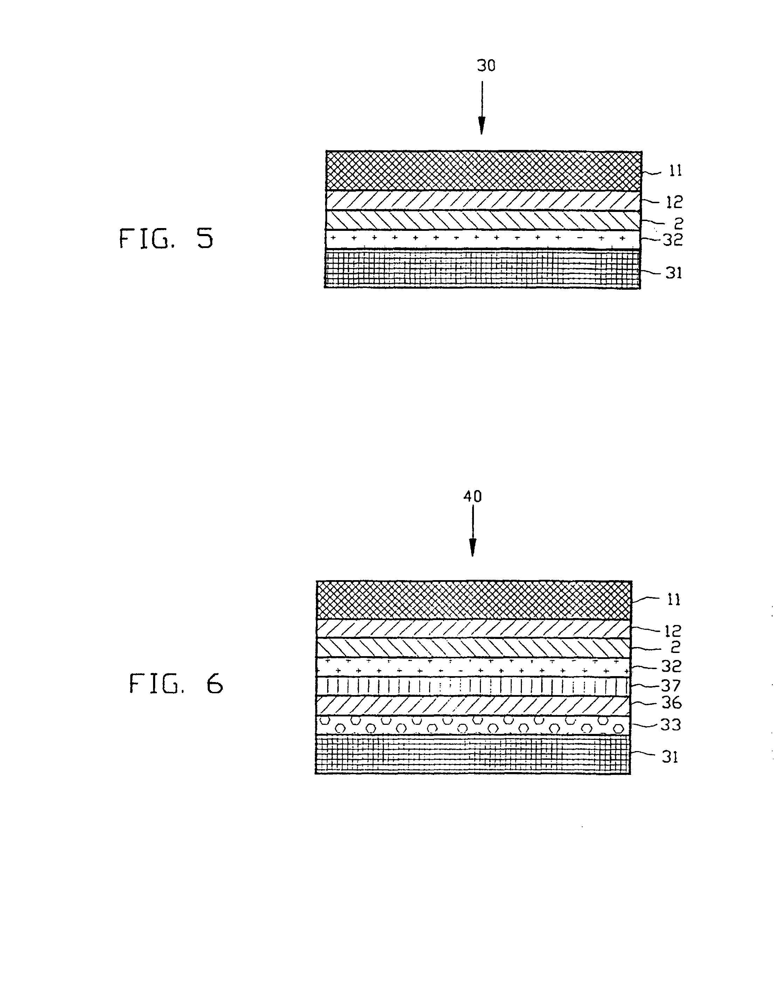

Referring now to FIG. 6 there is shown a double ply label laminate **40** of the present invention comprising a face layer **11**, a PSA layer **12**, a non-PSA layer **2**, a silicone release coating layer **32** and a liner layer **31**, these layers being identical to the corresponding layers of the dry peel label laminate **30,** and further comprising a liner layer **37** (which liner layer **37** is similar to the liner layer **31**), a PSA layer **36** and a silicone release coating layer **33**.

Having converted the dry peel label laminate **40**, i.e. having cut the face layer into e.g. coupons, these coupons may be peeled from the dry peel label laminate **40** upon which delamination occurs between the PSA layer **36** and the silicone release coating layer **33** resulting in a sticky revealing surface of the PSA layer **36** and a non-sticky revealing surface of the silicone release coating layer **33**. Then, this coupon may be attached to the outer surface of a product container, e.g. a bottle, by way of the sticky PSA layer **36.** One may peel the coupon from the product container upon which dry peel delamination occurs in the same manner as was described for the dry peel delamination of the dry peel label laminate **30**.

The release force between the non-PSA layer **2** and the silicone release coating layer **32** is greater than the release force between the PSA layer **36** and the silicone release coating layer **33** so that said coupon can be easily separated from the silicone release coating layer **33** and be attached to a product container.

The dry peel label laminate **30** of the present invention may be made by the wet-on-dry process in which application of the non-PSA layer **2** and application of the PSA layer **12** are performed in two separate steps in two separate coating devices. In using the wet-on-dry process the combinations of hot melt non-PSA and hot melt PSA; hot melt non-PSA and a PSA emulsion; a non-PSA emulsion and hot melt PSA; or a non-PSA emulsion and a PSA emulsion may be used. However, when using non-PSA and PSA emulsions in making the dry peel label laminate **30** of the present invention, the wet-on-wet process may also be used. In the wet-on-wet process, application of the non-PSA layer **2** and application of the PSA layer **12** are performed in one step in one coating device. This substantially increases the production speed of the wet-on-wet process as compared to that of the wet-on-dry process.

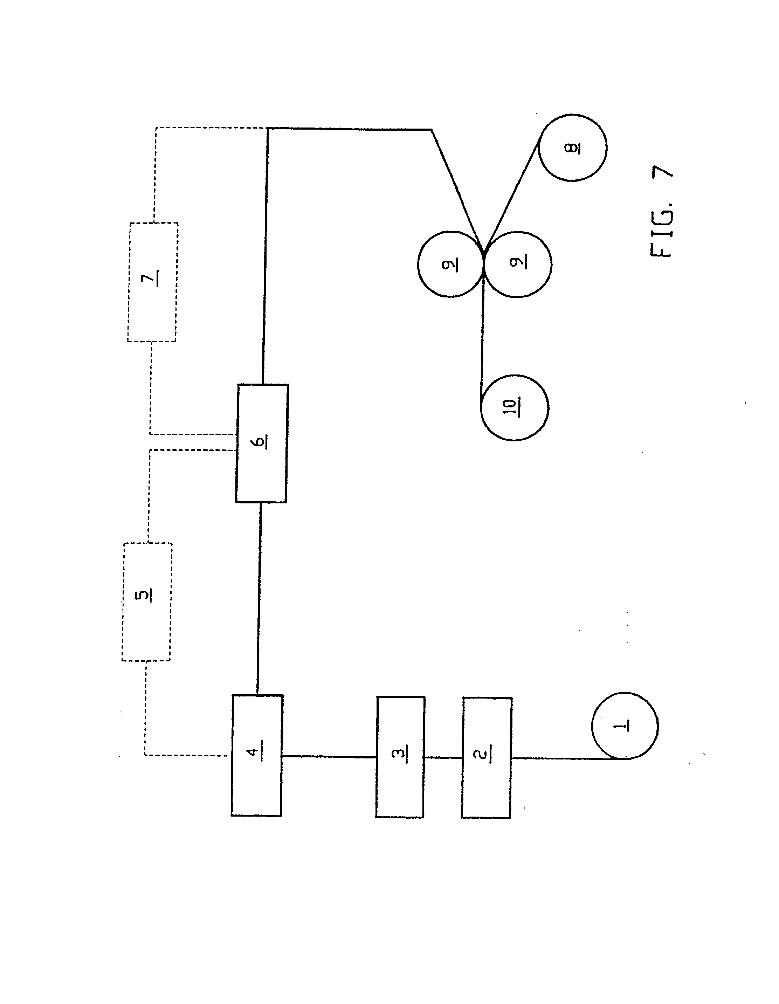

Referring now to FIG. 7 there is shown the wet-on-dry process of making the dry peel label laminate **30** of the present invention.

A first step in the wet-on-dry process is the application of a silicone release coating layer on top of a roll of liner material **1**. This step is called the siliconizing step **2**. Subsequently, the silicone release coating layer is dried and cured in an oven **3**.

After drying of the silicone release coating layer a next step in the wet-on-dry process is the application of a non-PSA layer in a coating device **4** on top of the silicone release coating layer. When a non-PSA emulsion rather than hot melt non-PSA is used the non-PSA layer is subsequently dried in an oven **5**. Then a PSA layer is applied on top of the non-PSA layer in a separate coating device **6**. When a PSA emulsion rather than hot melt PSA is used the PSA layer is dried in an oven **7**.

In a next step the intermediate laminate is further laminated on a roll of face material **8** in a laminating device **9** to yield a roll of the single ply label laminate of the present invention **10**. This single ply label laminate may be used in a second pass through the process to make a double ply label laminate **40** or piggyback.

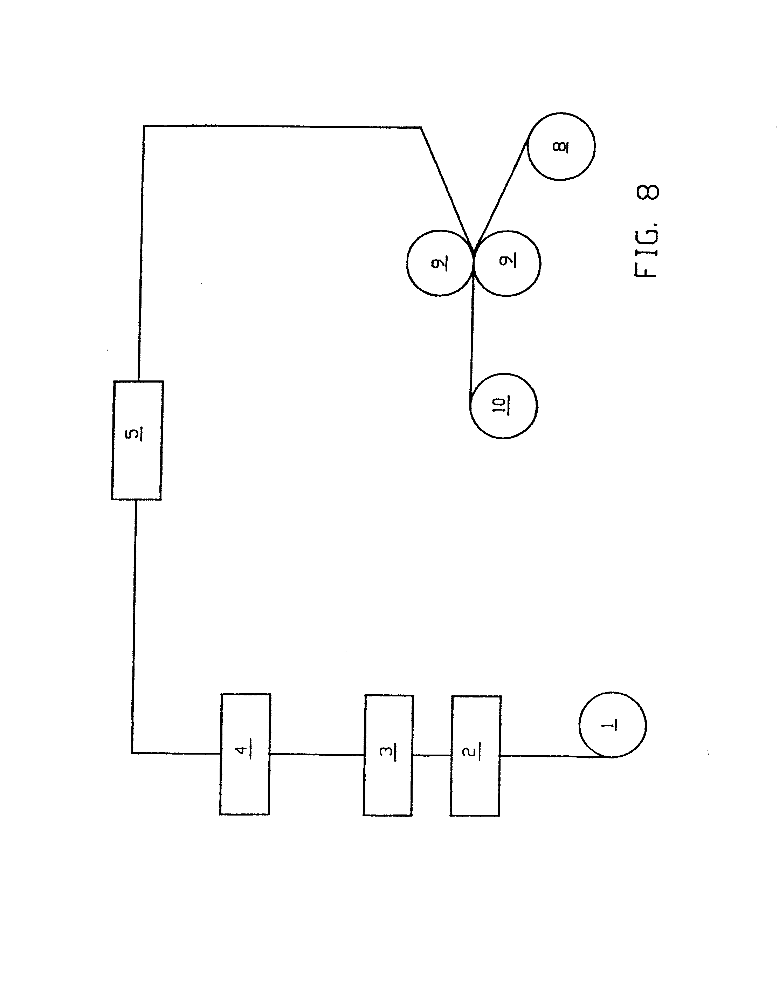

Referring now to FIG. 8 there is shown the wet-on-wet process of making the dry peel label laminate **30** of the present invention.

Application of the silicone release coating layer is performed in the same way as has been described above for the wet-on-dry process.

After drying and curing of the silicone release coating layer a next step is the application of a non-PSA layer and a PSA layer in one step in one coating device **4** (dual die), respectively, on top of the silicone release coating layer through a slot-die process. For a detailed description of the die technology reference is made to US-A 5,728,430, US-A 5,558,913 and WO 99/49440.

In the wet-on-wet process, the non-PSA layer and the PSA layer are applied as water based emulsions which emulsions have different viscosities to prevent mixing of the non-PSA emulsion with the PSA emulsion. The water based non-PSA emulsion used has a Brookfield viscosity [η] at room temperature in the range of 25 to 1250 mPa·s and preferably in the range of 75 to 500 mPa·s. The water based PSA emulsion used has a Brookfield viscosity [η] at room temperature in the range of 750 to 3500 mPa·s and preferably in the range of 1000 to 1500 mPa·s.

However, when using non-PSA and PSA emulsions in the wet-on-dry process (FIG. 7) the viscosities of these emulsions need not be different because the PSA layer is applied on a dry non-PSA layer and, consequently, mixing between non-PSA and PSA cannot take place.

After application of the non-PSA layer and the PSA layer in the wet-on-wet process both said layers are dried in an oven **5**. Subsequently, the intermediate laminate is further laminated in the same way as has been described above for the wet-on-dry process to yield a roll of the single ply label laminate of the present invention **10.**

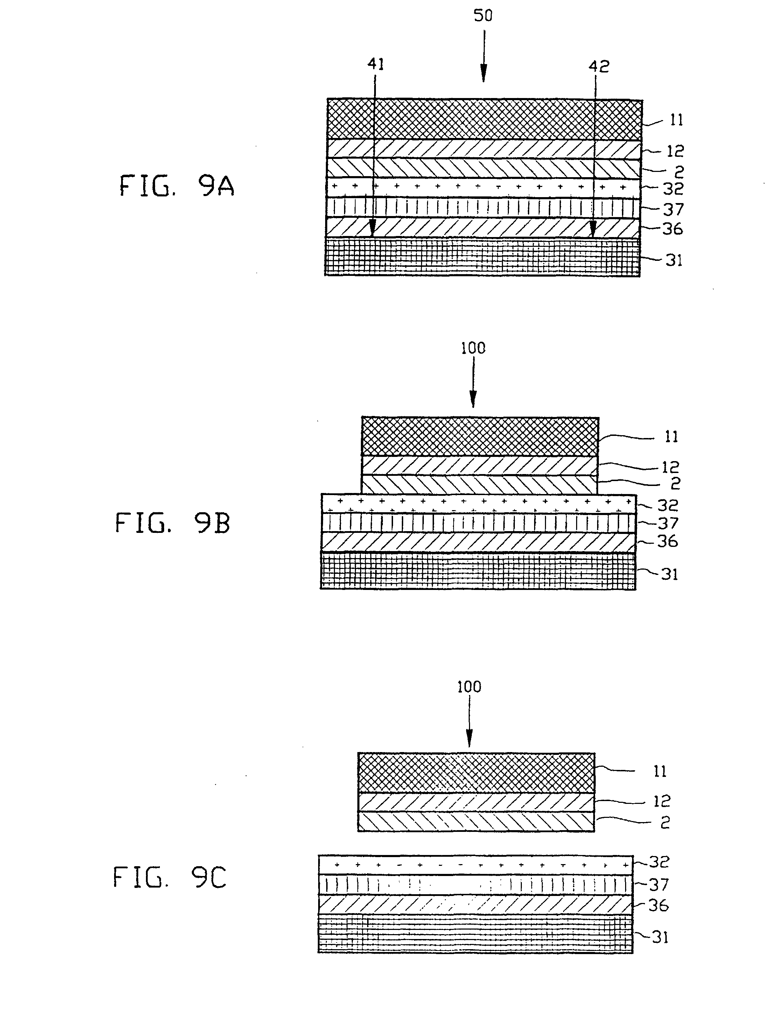

Referring now to FIG. 9A there is shown a single ply label laminate **50** of the present invention comprising a face layer **11**, a PSA layer **12**, a varnish layer **2** comprising polyurethanes (a non-PSA layer **2**), a wax layer **32** (a release coating layer **32**), a polyester layer **37**, a PSA layer **36** and a liner layer **31**.

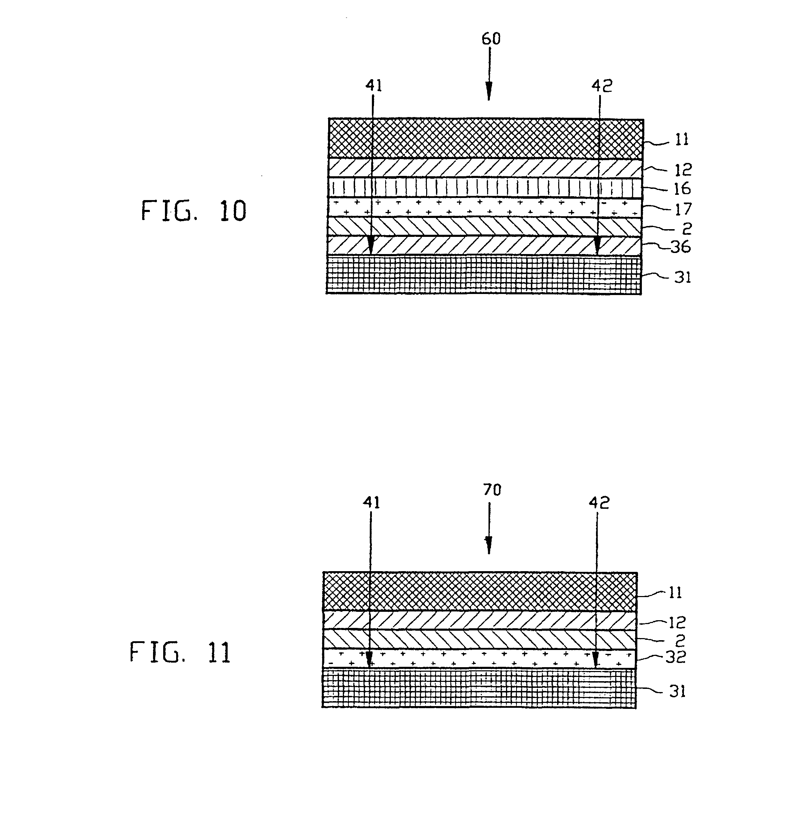

The order of the varnish layer **2**, the wax layer **32** and the polyester layer **37** in the dry peel label laminate **50** (as shown in FIG. 9A), may be altered. For example, in FIG. 10 a dry peel label laminate **60** of the present invention is shown which comprises in reversed order a polyester layer **16** (corresponding to said polyester layer **37**), a wax layer **17** (corresponding to said wax layer **32**) and the varnish layer **2**.

Further, the polyester layer **37** and the PSA layer **36** in the liner construct **3** in the dry peel label laminate **50** (as shown in FIG. 9A) may be omitted. For example, this is shown in FIG. 11 for a dry peel label laminate **70** of the present invention. In the dry peel label laminate **70** the liner layer **31** may be a polyester layer (e.g. polyethylene terephthalate) which functions as a liner layer.

Additionally, the dry peel label laminates of the present invention may comprise a decorative layer. Such decorative layer may be a coloured layer or metallized layer and may be present between the polyester layer **37** and the PSA layer **36** (for the dry peel label laminate **50**) or between the PSA layer **12** and the polyester layer **16** (for the dry peel label laminate **60**). Alternatively, the varnish layer **2** may be coloured.

The layers of the dry peel label laminates **50, 60** and **70** have the following characteristics.

The polyester layer **37** and the polyester layer **16**, respectively, are preferably transparent so that an optional printing on the face side of the liner layer **31** (of the dry peel label laminate **50**) and on the liner side of the face layer **11** (of the dry peel label laminate **60**), respectively, is visible once the face construct **1** is peeled from the liner construct **3**. Further, the polyester layers serve to make label laminates having higher tear resistance. Additionally, the polyester layers have a protective function (e.g. water resistance and/or protection of a printing from abrasive forces).

The polyester layers **37** and **16** comprise e.g. polyethylene terephthalate (PET). The thickness of the polyester layers are comprised within the range of 5 to 150 µm. The polyester layers preferably have a thickness of 5 to 50 µm, more preferably 5 to 15 µm.

The wax layers **32** and **17** may be very thin, << 1 µm.

The face layer **11** and the liner layer **31** may be composed of either a conventional material such as paper or a plastic film. Such plastic film is preferably composed of a polyolefin such as polyethylene or polypropylene, or a polyester, such as polyethylene terephthalate (PET).

The face layer **11** and the liner layer **31** may be printed. Where these layers are composed of a plastic film such film should then have a print receptive top coating or should be subjected to a Corona treatment.

The face layer **11** and the liner layer **31** may be transparent or non-transparent.

The PSA layers **12** and **36** are composed of a pressure sensitive adhesive (PSA) which is a permanent adhesive. Examples of PSAs are acrylic based PSAs and rubber based PSAs. Acrylic based PSAs may comprise one or more different poly(meth)acrylates and/or copolymers and/or derivatives of these polymers and/or copolymers. Examples of rubber based PSAs are disclosed in US 5,290,842 and EP 0,520,035 (in name of Avery Dennison Corporation) which are incorporated herein by reference. These PSAs may additionally comprise pigments and auxiliaries which increase the coating capacity of the PSAs. The PSA is applied either as a solventless system (hot melt PSA) or as a component of a solvent based system (PSA solution) or a water based system (PSA emulsion)

The PSA of the PSA layers **12** and **36** have a coatweight which is comprised within the range of 1 to 30 g/m² dry weight. The thickness of the PSA layers **12** and **36** may suitably be adjusted to any type of face material or liner material used, respectively. In case of relatively tear resistant materials the PSA coatweight may be greater than 30 g/m² dry weight.

The dry peel label laminates **50, 60** and **70** can be converted into labels having a particular shape. For example, these dry peel label laminates can be converted into labels having a rectangular shape for the production of business cards. The vertical direction of the converting is shown by the arrows **41** and **42** in FIG. 9A, 10 and 11. The converting is performed from the face layer **11** up to the liner layer **31.** It is not detrimental when the liner layer **31** is partially cut as long as this layer does not loose its carrier properties.

Having converted the dry peel label laminate **50** into the form of business cards **100** and removed the matrix surrounding the business cards **100** (as shown in FIG. 9B), these may be peeled from the dry peel label laminate **50** (as shown in FIG. 9C). Upon peeling the business card **100** dry peel delamination takes place between the varnish layer **2** and the wax layer **32** resulting in the revealing surfaces of both layers being non-sticky.

Upon peeling the dry peel label laminate **60** dry peel delamination also takes place between the wax layer (i.e. the wax layer **17** corresponding to the wax layer **32** of the dry peel label laminate **50**) and the varnish layer **2** (not shown in FIG. **10**). However, in contrast with the dry peel label laminate **50** the polyester layer **16** from the dry peel label laminate **60** remains with the face construct **1** being peeled. In this way the polyester layer **16** provides a "no tear" property to the face construct **1**, as mentioned above.

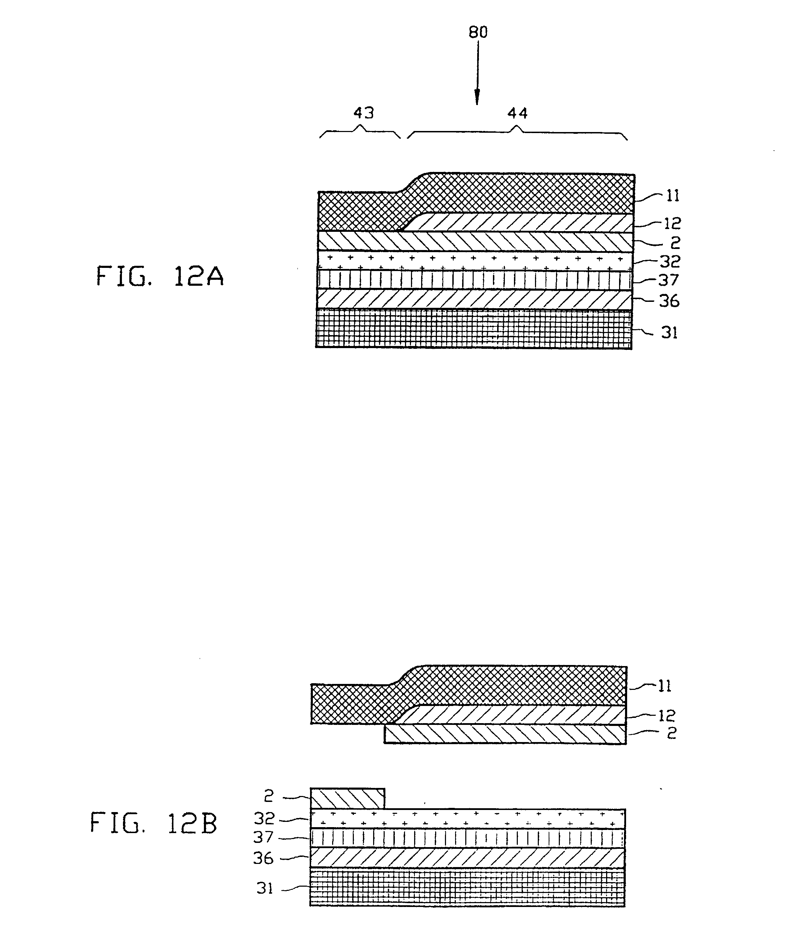

The PSA from the PSA layer **12** may be pattern-coated. This is shown for the dry peel label laminate **50** in FIG. 12A where this pattern-coating results in a dry peel label laminate **80** of the present invention. The application of the PSA for the PSA layer **12** by pattern-coating results in the presence of parts without such PSA (ungum parts **43**) and parts with such PSA (gum parts **44**). The presence of the ungum parts **43** is especially convenient when peeling is performed manually. When peeling is performed machinally the presence of the ungum parts **43** is not necessary.

Upon peeling the dry peel label laminate **80** dry peel delamination takes place between the varnish layer **2** and the wax layer **32** in the gum parts **44** and between the face layer band the varnish layer **2** in the ungum parts **43.**

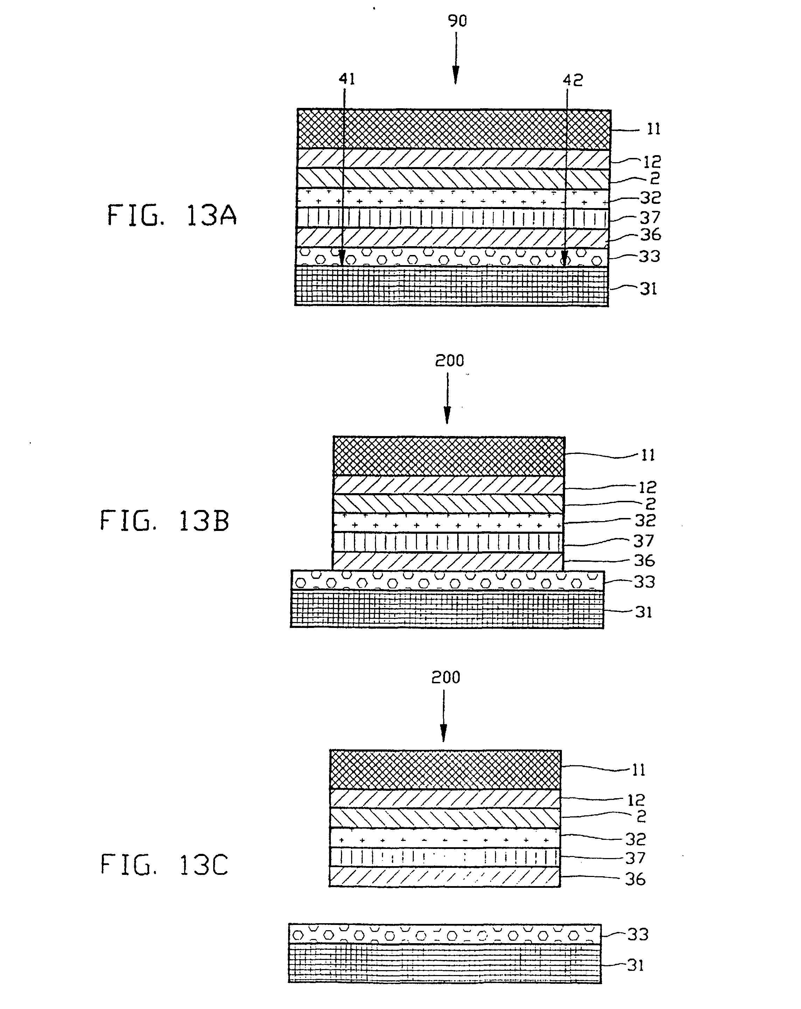

Referring now to FIG. 13A there is shown a double ply label laminate **90** of the present invention comprising a face layer **11**, a PSA layer **12**, a varnish layer **2**, a wax layer **32,** a polyester layer **37**, a PSA layer **36** and a liner layer **31**, these layers being identical to the corresponding layers of the dry peel label laminate **50,** and further comprising a silicone release coating layer **33** between the PSA layer **36** and the liner layer **31**.

In applying a silicone release coating layer the silicones are applied on the liner layer **31** either as 100% solid thermosetting silicones (solventless system) or as silicones mixed with a solvent (solvent based system). Silicone release coating layers may or may not contain a control release agent.

The dry peel label laminate **90** can be converted into labels having a particular shape. For example, the dry peel label laminate **90** can be converted into labels having a particular shape for the production of coupons. The vertical direction of the converting is shown by the arrows **41** and **42** in FIG. 13A.

Having converted the dry peel label laminate **90** into the form of coupons **200** and removed the matrix surrounding the couponsb(as shown in FIG. 13B), these may be peeled from the dry peel label laminate **90** (as shown in FIG. 13C). The release force between the varnish layer **2** and the wax layer **32** is greater than the release force between the PSA layer **36** and the silicone release coating layer **33**. Therefore, upon peeling the coupon **200** delamination takes place between the PSA layer **36** and the silicone release coating layer **33**, resulting in a sticky revealing surface of the PSA layer **36** and a non-sticky revealing surface of the silicone release coating layer **33**.

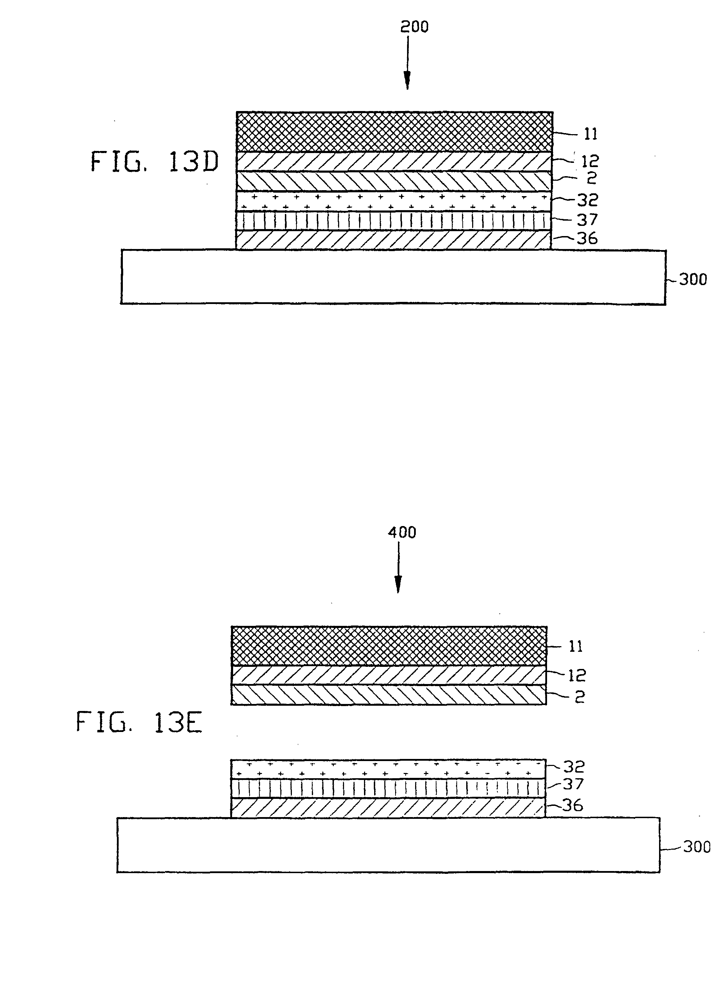

Then (as shown in FIG. 13D), the coupon **200** may be attached to a substrate **300** (e.g. the outer surface of a product container such as a bottle) by way of the sticky PSA layer **36**. The release force between the PSA layer **36** and the substrate **300** is greater than the release force between the varnish layer **2** and the wax layer **32.** Therefore (as shown in FIG. 13E), a coupon **400** may be peeled from the substrate **300** upon which dry peel delamination takes place between the varnish layer **2** and the wax layer **32.**

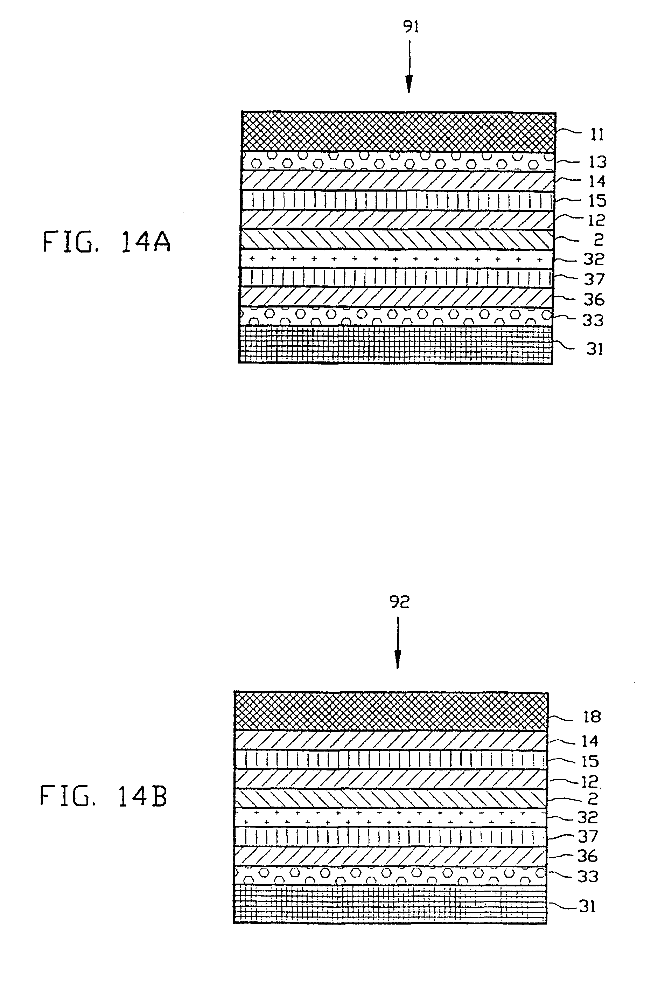

Referring now to FIG. 14A there is shown a triple ply label laminate **91** of the present invention comprising a face layer **11**, a PSA layer **12,** a varnish layer **2**, a wax layer **32**, a polyester layer **37**, a PSA layer **36,** a silicone release coating layer **33** and a liner layer **31**, these layers being identical to the corresponding layers of the dry peel label laminate **90**, and further comprising a silicone release coating layer **13**, a PSA layer **14** and a polyester layer **15,** between the face layer **11** and the PSA layer **12**.

The silicone release coating layer **13**, the PSA layer **14** and the polyester layer **15** are identical to the silicone release coating layer **33,** the PSA layers **12** and **36** and the polyester layer **37**, respectively.

The release force between the varnish layer **2** and the wax layer **32** is greater than the release force between the PSA layer **36** and the silicone release coating layer **33** which in turn is greater than the release force between the silicone release coating layer **13** and the PSA layer **14.**

The dry peel label laminate **91** may then be delaminated upon which delamination takes place between the silicone release coating layer **13** and the PSA layer **14** resulting in a sticky revealing surface of the PSA layer **14** (not shown in FIG. 14A). As shown in FIG. 14B, the face layer **11** and the silicone release coating layer **13** may then be replaced by a face layer **18** which may be printed on its liner side and which is applied on the sticky surface of the PSA layer **14** resulting in a double ply label laminate **92** of the present invention which may then be passed through a printer in order to print the face side of the face layer **18**.

Subsequently, the double ply label laminate **92** may be converted and delaminated in the same way as described for the double ply label laminate **90** as shown in FIG. 13A-E.

The polyester layer **15** in the face construct **1** of the dry peel label laminate **92** can be used as a way to overlaminate and protect an optional printing on the liner side of the face layer **18.** However, it is also possible that in the face construct **1** of the dry peel label laminate **91** the PSA layer **14** and the polyester layer**15** are omitted.

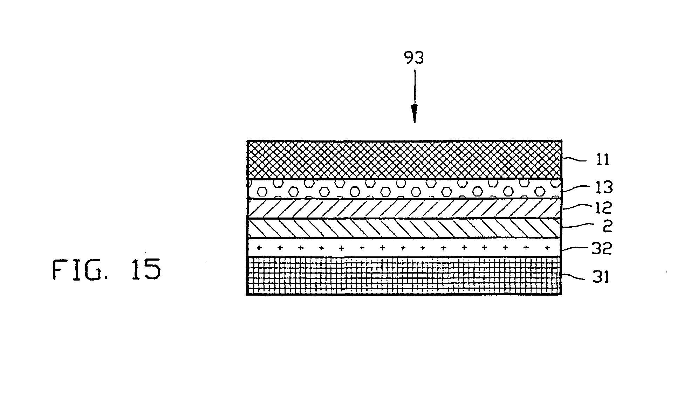

Referring now to FIG. 15 there is shown a double ply label laminate **93** of the present invention comprising a face layer **11,** a PSA layer **12**, a varnish layer **2**, a wax layer **32** and a liner layer **31,** these layers being identical to the corresponding layers of the dry peel label laminate **70**, and further comprising a silicone release coating layer **13** between the face layer **11** and the PSA layer **12.**

The release force between the varnish layer **2** and the wax layer **32** is greater than the release force between the the silicone release coating layer **13** and the PSA layer **12.** Therefore, a first delamination takes place between the silicone release coating layer **13** and the PSA layer **12** and a second, dry peel delamination takes place between the varnish layer **2** and the wax layer **32**.

The thickness of the liner layer **31** in the dry peel label laminates **70** and **93** may be comprised within the range of 5 to 15 µm. However, in case adequate tear resistance is required in order to dispense die-cut (i.e. converted), peel-plate-dispensable labels, a greater thickness (for example 30 µm) is preferred.

Another embodiment of the present invention is a dry peel label laminate comprising from face side to liner side: a polyester layer, a wax layer, a varnish layer, a PSA layer, a silicone release coating layer and a liner layer, these layers being identical to the corresponding layers of other embodiments of the present invention. Such dry peel label laminate is a double ply label laminate such as the dry peel label laminate **90** (as shown in FIG. 13A). Delamination takes place in the same way as shown in FIG. 13A-E. A first delamination takes place between the PSA layer and the silicone release coating layer after which the label laminate is applied to a substrate. Then a second, dry peel delamination takes place between the wax layer and the varnish layer whereby the varnish layer and the PSA layer remain on the substrate.

The dry peel release force of the dry peel label laminates of the present invention as described above is comprised within the range of 5 to 200 g.f/inch. By modifying the layer construction of these dry peel label laminates the dry peel release force may suitably be adjusted to any type of material used in the face layer **11**.

For flexible face materials a dry peel release force of about 15 g.f/inch is preferably used. For more tear resistant face materials a dry peel release force of about 100 g.f/inch is preferably used.

When a relatively high dry peel release force is desired (e.g. in the order of magnitude of about 100 g.f/inch), the wax layer in the dry peel label laminates of the present invention as described above may be omitted. In that case dry peel delamination takes place between the varnish layer **2** and the polyester layer **37** (or the polyester layer **16** for the dry peel label laminate **60**, or the liner layer **31** for the dry peel label laminates **70** and **93**).

The dry peel label laminates **50, 60, 70, 80, 90, 91, 92** and **93** of the present invention may be made in a one pass process or a multi pass process the latter process being more efficient. In the present invention the dry peel label laminates are made in 2 or 3 passes each pass resulting in a part to be combined with the part resulting from a subsequent pass.

A process of making one particular dry peel label laminate of the present invention, dry peel label laminate **50**, will be illustrated in more detail.

The dry peel label laminate **50** is made in 2 separate passes. This means that 2 parts of this dry peel label laminate are made separately and finally these 2 parts are combined in order to obtain the dry peel label laminate **50**.

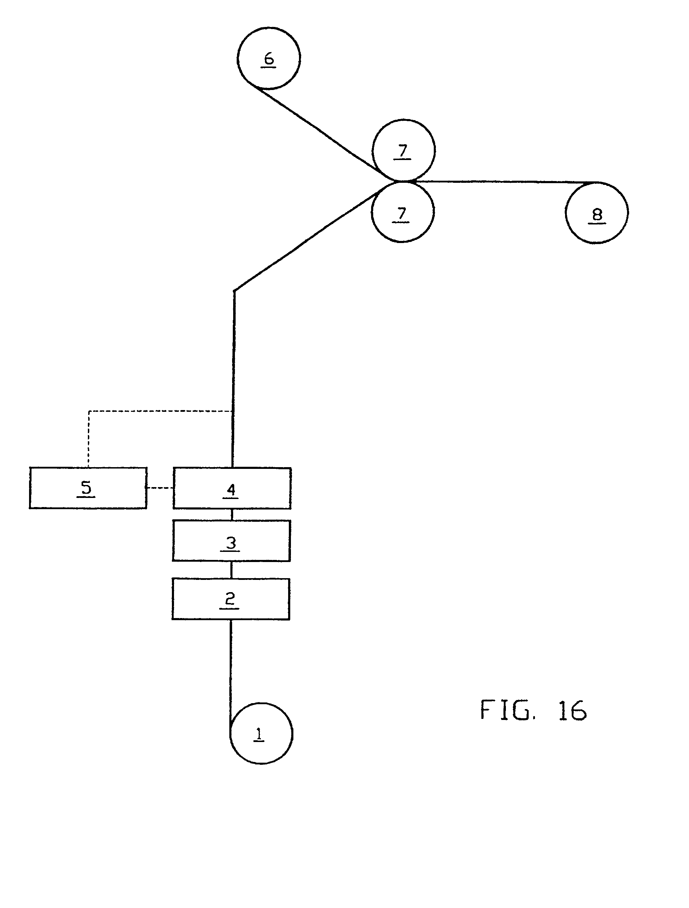

Referring now to FIG. 16 there is shown a process of making the first part of the dry peel label laminate **50**, comprising the following layers: a polyester layer **37**, a wax layer **32**, a varnish layer **2**, a PSA layer **12** and a face layer **11.**

A first step **2** is the application of a wax layer on top of a roll **1** of polyester material. In a next step **3** a varnish layer is applied.

Subsequently, in step **4** an adhesive (PSA) layer is applied. This may be done by using either a PSA emulsion, a PSA solution or hot melt PSA. An advantage of using a PSA emulsion is the good flow property thereof. If a PSA emulsion is used the resulting PSA layer should be dried in an oven **3**.

Finally, lamination on a roll **6** of face material takes place in a laminating device **7** to yield a roll **8** of the first part of the dry peel label laminate **50.**

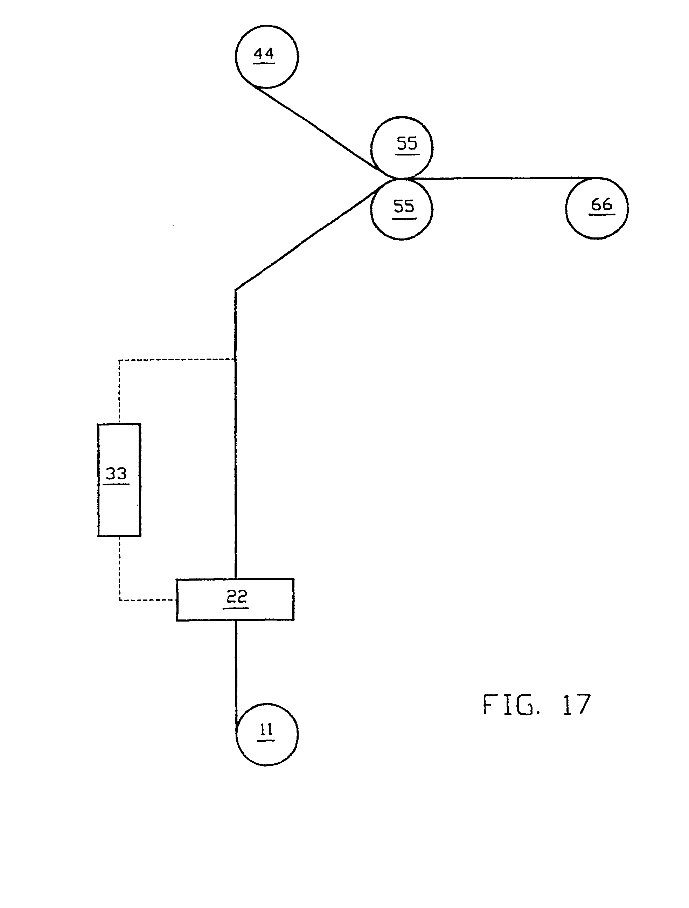

Referring now to FIG. 17 there is shown a process of making the second part of the dry peel label laminate **50,** comprising the following layers: a PSA layer **36** and a liner layer 31, and combining the first and second part.

A first step **22** is the application of an adhesive (PSA) layer on top of a roll **11** of liner material resulting in the second part of the dry peel label laminate **50**. If a PSA emulsion is used the resulting PSA layer should be dried in an oven **33**.

Finally, lamination on a roll **44** of the first part takes place in a laminating device **55** to yield a roll **66** of the dry peel label laminate **50**.

### EXAMPLES

### Example 1

A single ply label laminate having the layer construction as shown in FIG. 5 was prepared.

A silicone release coating layer is applied on a paper liner by means of a roll coating device. Next, the silicone release coating layer is thermally cured and dried in an oven. The silicone coatweight of the silicone release coating layer is 0.10 to 0.15 g/m². The silicone release coating layer contains a CRA in the amount of 30 wt.%, with respect to the silicone weight.

In a next step a non-PSA layer and a PSA layer, successively, are applied on the first silicone release coating layer by means of a dual die in a coating device. The coatweight of the non-PSA layer and the PSA layer is 18 to 22 g/m². The ratio of PSA:non-PSA is about 1:1.

In applying the non-PSA layer a water based emulsion of Neocryl XK-90 (pH = 8,7, Brookfield viscosity at 25°C is 75 mPa·s and solids content is 45 wt.%) is used, available from Zeneca Resins, containing a polymethacrylate that also shows butyl groups in the IR spectrum and which has a T_{g} of 3°C, according to Differential Scanning Calorimetry (DSC). Neocryl XK-90 is a mixture of polybutylacrylate, polymethyl(meth)acrylate and poly(meth)acrylate in the weight ratio of 69:26:5. Neocryl XK-90 also contains an aromatic modified ethylene oxide surfactant. The value of E' after drying of the non-PSA emulsion used is 0.3 x 10⁹ Pa (23°C). In applying the PSA layer a common water based non-resinated acrylic permanent PSA emulsion is used.

Having applied the non-Psa layer and the PSA layer these are dried in an oven. In a next step a face material, a transparent polyester film having a thickness of 50 µm, is laminated on the PSA layer yielding a single ply label laminate. The web speed of the overall process is 50 m/min.

The dry peel release force of the single ply label laminate measured at a delamination velocity of 10 m/min and under a delamination angle of 180° is 10 to 20 cN/25 mm.

### Example 2

A double ply label laminate having the layer construction as shown in FIG. 6 (piggyback) was prepared.

A first silicone release coating layer is applied on a first paper liner by means of a roll coating device. Next, the silicone release coating layer is thermally cured and dried in an oven. The silicone coatweight of the first silicone release coating layer is 0.01 to 0.1 g/m². The first silicone release coating layer contains a CRA in the amount of 35 wt.%, with respect to the silicone weight.

In a next step a non-PSA layer and a PSA layer, successively, are applied on the first silicone release coating layer by means of a dual die in a coating device. In applying the non-PSA layer and the PSA layer the emulsions of Example 1 are used. The coatweight of the non-PSA layer and the PSA layer is 18 to 22 g/m². The ratio of PSA:non-PSA is about 1:1.

Having applied the non-PSA layer and the PSA layer these are dried in an oven. In a next step a face material, a thermal paper having a weight of 76 g/m², is laminated on the PSA layer. In this first process pass a single ply label laminate is prepared at a web speed of 50 m/min.

In a second process pass the piggyback is prepared at a web speed of 100 m/min. A first step in this second pass is the application of the second silicone release coating layer on a second paper liner. Subsequently, this second silicone release coating layer is cured and dried in an oven. The silicone coatweight of the second silicone release coating layer is 1.0 to 1.1 g/m².

In a next step a permanent PSA adhesive is applied on the second silicone release coating layer and dried in an oven. Finally the single ply label laminate from the first process pass is laminated on the permanent PSA adhesive yielding a piggyback.

The dry peel release force of the piggyback measured at a delamination velocity of 10 m/min and under a delamination angle of 180° is 70 to 80 cN/25 mm.

### Example 3

The compounds and processes of Example 1 are used with the exception of Joncryl eco 2124 (pH = 8.0, Brookfield viscosity at 25°C is 1000 mPa·s and solids content is 47 wt.%), available from Johnson Polymers, containing a polymethacrylate that also shows methyl, butyl and styrene groups in the IR spectrum and which has a T_{g} (DSC) of 35°C, which is used as the non-PSA emulsion, yielding a single ply label laminate.

The dry peel release force of the single ply label laminate measured at a delamination velocity of 10 m/min and under a delamination angle of 180° is 15 to 25 cN/25 mm.

### Example 4

The compounds and processes of Example 2 are used with the exception of Joncryl eco 2124 (see Example 3) which is used as the non-PSA emulsion, yielding a piggyback.

The dry peel release force of the piggyback measured at a delamination velocity of 10 m/min and under a delamination angle of 180° is 70 to 80 cN/25 mm.

The dry peel label laminates of the present invention may be used as dry tags, coupons, hanger labels, collar labels, exhibition or seminar cards, membership cards, business cards and so on. Two uses, i.e. business cards and coupons, have already been described in the present patent application. For example, the advantage of using the single ply label laminate of the present invention in manufacturing seminar cards is that instead of using stacks of label laminate sheets label laminate rolls may be used. In this way seminar cards can be more easily printed on the spot.

One possible other use not mentioned before is the use of the dry peel label laminates of the present invention as voids. In such use a text, e.g. a warning or secret information, is printed on the silicone release coating layer **32** and after removing of the non-PSA layer **2** this text will appear.

### EXAMPLES 5-12

The materials used in the layers of the dry peel label laminates made in the following Examples are commercially available and are FASSON branded label materials of Avery Dennison Corporation (Leiden, The Netherlands), with the exception of the varnish layer, the wax layer (comprising polyurethanes) and the polyester layer. The coatweights of the silicone layers are measured with X-ray.

In all Examples the varnish layer, the wax layer and the polyester layer are identical with the proviso that the order of these layers can differ. The polyester layer comprises clear polyethylene terephthalate (PET) and has a coatweight of 12 g/m² and a thickness of 12 µm, unless otherwise indicated.

Further, in all Examples the silicone release coating layer has a coatweight of 1 g/m² and a thickness of 1 µm. The PSA layers have a coatweight of 18 g/m² and a thickness of 15 µm.

### Example 5

A single ply label laminate having the layer construction as shown in FIG. 9A was prepared.

The face layer is MC Primecoat which is white, one side machine-coated, calendered printing paper and has a basis weight of 80 g/m² and an average thickness of 69 µm.

The two PSA layers comprise S2045 which is disclosed in US 5,290,842 and EP 0,520,035 (in name of Avery Dennison Corporation). S2045 is a general purpose, permanent, rubber based hot melt PSA. The coatweight of the PSA layer in the face construct is standard, 18 g/m². The coatweight of the PSA layer in the liner construct is also 18 g/m².

The liner layer is NL30 which is unbleached kraft paper and has a basis weight of 30 g/m² and an average thickness of 34 µm.

### Example 6

A single ply label laminate having the layer construction as shown in FIG. 10 was prepared.

The face layer is MC60 which is white, one side machine-coated, calendered, woodfree printing paper with a semi gloss appearance and has a basis weight of 62 g/m² and an average thickness of 55 µm.

The PSA layers are identical to those of Example 5.

The liner layer is BG40Wh (white) which is supercalendered glassine paper and has a basis weight of 61 g/m² and an average thickness of 56 µm.

### Example 7

A single ply label laminate was made corresponding to the label laminate of Example 6, with the exception that the MC60 face layer was replaced by a MC90 face layer.

MC90 is white, one side machine-coated, calendered, woodfree printing paper with a semi gloss appearance and has a basis weight of 88 g/m² and an average thickness of 78 µm.

### Example 8

A double ply label laminate having the layer construction as shown in FIG. 13A was prepared.

The face layer is PP Top NG Clear which is a biaxially oriented polypropylene film with a print receptive top coating and has a basis weight of 46 g/m² and an average thickness of 50 µm.

The two PSA layers comprise S697 which is a permanent, acrylic based solvent PSA. The coatweight of the PSA layer in the face construct is standard and the coatweight of the PSA layer in the liner construct is 22 g/m² in order to achieve full adhesive performance.

The liner layer is BG45Wh which is white, supercalendered glassine paper and has a basis weight of 72 g/m² and an average thickness of 63 µm.

### Example 9

A double ply label laminate was made corresponding to the label laminate of Example 8, with the exception that the PP Top NG Clear face layer was replaced by a Laser PET Transparent face layer, the adhesive from the PSA layer in the face construct was pattern-coated (as shown in FIG. 12A concerning a single ply label laminate not containing a silicone release coating layer) and the coatweight of the PSA layer in the liner construct is 19 g/m².

Laser PET Transparent is a matt transparent, heat stabilized polyester film with an ink and toner receptive top coating and has a basis weight of 55 g/m² and an average thickness of 46 µm.

### Example 10

A double ply label laminate was made corresponding to the label laminate of Example 8, with the exception that the PP Top NG Clear face layer was replaced by a MC Primecoat face layer which has also been used in Example 5.

### Example 11

A triple ply label laminate having the layer construction as shown in FIG. 14A was prepared.

The face layer is BG40 (brown) which has also been used in Example 6 (as a liner layer). The PET layer in the face construct has a thickness of 36 µm.

The three PSA layers comprise S697 which has also been used in Examples 4-6. The coatweights of the two PSA layers in the face construct are standard and are higher than the coatweight of the PSA layer in the liner construct.

### Example 12

A double ply label laminate having the layer construction as shown in FIG. 15 was prepared.

The combination of the face layer and the silicone release coating layer has a white colour. The combination of the PSA layer and the varnish layer has a brown colour. The combination of the wax layer and the PET layer is colourless. The polyester layer has a thickness of 30 µm.

### Results

The label laminates prepared in the above Examples were tested for the stability over time of the dry peel release force between the varnish layer and the wax layer.

The test conditions were the following: aged at a temperature of 23 ± 2°C and a relative humidity of 50 ± 5%.

Delamination between the varnish layer and the wax layer of all label laminates yielded non-sticky revealing surfaces on both the varnish layer and the wax layer.

The dry peel release force between the varnish layer and the wax layer of all label laminates, measured at a delamination velocity of 10 m/min and under a delamination angle of 180° (measured in analogy to FTM4), is 10 to 15 g.f/inch. The dry peel release force between the varnish layer and the wax layer of all label laminates is stable over time.

## Claims

1. A dry peel label laminate comprising a face construct (1), a dry peel adhesive layer (2) and a liner construct (3), successively, wherein said face construct (1) comprises a face layer (11) and a pressure sensitive adhesive layer (12), said liner construct (3) comprises a liner layer (31) and said dry peel adhesive layer (2) is a non-pressure sensitive adhesive layer which contains one or more polymers and/or copolymers, and/or derivatives of said one or more polymers and/or copolymers, the storage modulus E' of which is greater than 1 x 10⁷ Pa at a temperature in the range of 10 to 50°C.

2. A dry peel label laminate according to claim 1, wherein said one or more polymers are selected from a group comprising poly(meth) acrylates, polyesters, polypropylene, polyamides, polyurethanes, vinylic polymers, styrenebutadiene rubbers and poly(vinylhydroxy) compounds.

3. A dry peel label laminate according to claim 2, wherein said one or more polymers comprise poly(meth)acrylates.

4. A dry peel label laminate according to any of the preceding claims, wherein in said face construct (1) said pressure sensitive adhesive layer (12) is adjacent to said non-pressure sensitive adhesive layer (2) , and said liner construct (3) additionally comprises a release coating layer (32) adjacent to said non-pressure sensitive adhesive layer (2).

5. A dry peel label laminate according to claim 4, wherein said release coating layer (32) is a silicone release coating layer.

6. A dry peel label laminate according to claim 5, wherein the silicone weight per surface area unit in said silicone release coating layer (32) is comprised within the range of 0.01 to 2.00 g/m².

7. A dry peel label laminate according to claim 5 or 6, wherein said silicone release coating layer (32) comprises a control release agent in a weight per surface area unit up to 100 wt.%, with respect to the silicone weight per surface area unit.

8. A dry peel label laminate according to any of claims 5-7, wherein said liner construct (3) additionally comprises a liner layer (37) adjacent to said silicone release coating layer (32), a pressure sensitive adhesive layer (36) adjacent to said liner layer (37) and a silicone release coating layer (33) adjacent to said pressure sensitive adhesive layer (36).

9. A dry peel label laminate according to claim 2, wherein said non-pressure sensitive adhesive layer (2) is a varnish layer which comprises polyurethanes.

10. A dry peel label laminate according to claim 9, wherein in said face construct (1) said pressure sensitive adhesive layer (12) is adjacent to said varnish layer (2), and said liner construct (3) additionally comprises a release coating layer (32) adjacent to said varnish layer (2).

11. A dry peel label laminate according to claim 10, wherein said release coating layer (32) is a wax layer.

12. A dry peel label laminate according to claim 11, wherein said face construct (1) additionally comprises a silicone release coating layer (13) adjacent to said pressure sensitive adhesive layer (12).

13. A dry peel label laminate according to claim 11, wherein said liner construct (3) additionally comprises a polyester layer (37) adjacent to said wax layer (32) and a pressure sensitive adhesive layer (36) adjacent to said polyester layer (37).

14. A dry peel label laminate according to claim 13, wherein said liner construct (3) additionally comprises a silicone release coating layer (33) adjacent to said pressure sensitive adhesive layer (36).

15. A dry peel label laminate according to claim 14, wherein said face construct (1) additionally comprises a polyester layer (15) adjacent to said pressure sensitive adhesive layer (12), a pressure sensitive adhesive layer (14) adjacent to said polyester layer (15) and a silicone release coating layer (13) adjacent to said pressure sensitive adhesive layer (14).

16. A dry peel label laminate according to claim 9, wherein in said face construct (1) said pressure sensitive adhesive layer (12) is adjacent to the liner side of said face layer (11), and that said face construct (1) additionally comprises a release coating layer (17) adjacent to said varnish layer (2).

17. A dry peel label laminate according to claim 16, wherein said release coating layer (17) is a wax layer.

18. A dry peel label laminate according to claim 17, wherein said face construct (1) additionally comprises a polyester layer (16) adjacent to said wax layer (17), and said liner construct (3) additionally comprises a pressure sensitive adhesive layer (36) adjacent to said varnish layer (2).

19. A dry peel label laminate according to any of the preceding claims, wherein said face layer (11) and said liner layers (31) and (37) are the same or different and are made of a material selected from a group comprising paper and plastic film.

20. A dry peel label laminate according to claim 19, wherein said plastic film is made of a polymer selected from a group comprising polyolefins and polyesters.

21. A dry peel label laminate according to claim 20, wherein said plastic film is made of polyethylene terephthalate.

22. A dry peel label laminate according to any of the preceding claims, wherein said polyester layers (15), (16) and (37) are made of polyethylene terephthalate.

23. A dry peel label laminate according to any of the preceding claims, wherein the pressure sensitive adhesive in said pressure sensitive adhesive layers (12), (14) and (36) is selected from a group comprising acrylic based adhesives and rubber based adhesives.

## Patentansprüche

1. Trockenabziehetikettmehrschichtenverbund umfassend beziehungsweise eine Stirnkonstruktion (1), eine trockene Abziehklebeschicht (2) und eine Einlagekonstruktion (3), wobei die Stirnkonstruktion (1) eine Stirnschicht (11) und eine Haftklebeschicht (12) umfaßt, wobei die Einlagekonstruktion (3) eine Einlageschicht (31) umfaßt und die trockene Abziehklebeschicht (2) eine nicht-Haftklebeschicht ist, die eine oder mehrere Polymere und/oder Copolymere, und/oder Ableitungen der einen oder mehreren Polymere und/oder Copolymere umfaßt, wobei der Speichermodul E' größer als 1 x 10⁷ Pa ist, bei einer Temperatur zwischen 10 bis 50°C.

2. Trockenabziehetikettmehrschichtenverbund nach Anspruch 1, wobei ein oder mehrere Polymere aus einer Gruppe umfassend Poly(meth)acrylate, Polyester, Polypropylene, Polyamide, Polyurethane, Vinylpolymere, Styrol-Butadien-Kautschuke und Poly(vinylhydroxy) Verbindungen ausgewählt werden.

3. Trockenabziehetikettmehrschichtenverbund nach Anspruch 2, wobei ein oder mehrere Polymere Poly(meth)acry!ate umfassen.

4. Trockenabziehetikettmehrschichtenverbund nach einem der vorhergehenden Ansprüche, wobei in der Stirnkonstruktion (1) die Haftklebeschicht (12) an die nicht-Haftklebeschicht (2) anliegt, und die Einlagekonstruktion (3) zusätzlich eine an die nicht-Haftklebeschicht (2) anliegende Trennschicht (32) umfaßt.

5. Trockenabziehetikettmehrschichtenverbund nach Anspruch 4, wobei die Trennschicht (32) eine Silikontrennschicht ist.

6. Trockenabziehetikettmehrschichtenverbund nach Anspruch 5, wobei das Silikongewicht pro Oberflächenbereicheinheit in der Silikontrennschicht (32) zwischen 0,01 bis 2.00 g/m² beträgt.

7. Trockenabziehetikettmehrschichtenverbund nach Anspruch 5 oder 6, wobei die Silikontrennschicht (32) ein gesteuertes Trennmittel in einem Gewicht pro Oberflächenbereicheinheit bis 100 Gewichtsprozent, bezüglich des Silikongewichtes pro Oberflächenbereicheinheit, umfaßt.

8. Trockenabziehetikettmehrschichtenverbund nach einem der Ansprüche 5-7, wobei die Einlagekonstruktion (3) zusätzlich eine an die Silikontrennschicht (32) anliegende Einlageschicht (37), eine an die Einlageschicht (37) anliegende Haftklebeschicht (36) und eine an die Haftklebeschicht (36) anliegende Silikontrennschicht (33) umfaßt.

9. Trockenabziehetikettmehrschichtenverbund nach Anspruch 2, wobei die nicht-Haftklebeschicht (2) eine Lackschicht ist, welche Polyurethane umfaßt.

10. Trockenabziehetikettmehrschichtenverbund nach Anspruch 9, wobei in der Stirnkonstruktion (1) die Haftklebeschicht (12) an die Lackschicht (2) anliegt, und die Einlagekonstruktion (3) zusätzlich eine an die Lackschicht (2) anliegende Trennschicht (32) umfaßt.

11. Trockenabziehetikettmehrschichtenverbund nach Anspruch 10, wobei die Trennschicht (32) eine Wachsschicht ist.

12. Trockenabziehetikettmehrschichtenverbund nach Anspruch 11, wobei die Stirnkonstruktion zusätzlich eine an die Haftklebeschicht (12) anliegende Silikontrennschicht (13) umfaßt.

13. Trockenabziehetikettmehrschichtenverbund nach Anspruch 11, wobei die Einlagekonstruktion (3) zusätzlich eine an die Wachsschicht (32) anliegende Polyesterschicht (37) und eine an die Polyesterschicht (37) anliegende Haftklebeschicht (36) umfaßt.

14. Trockenabziehetikettmehrschichtenverbund nach Anspruch 13, wobei die Einlagekonstruktion (3) zusätzlich eine an die Haftklebeschicht (36) anliegende Silikontrennschicht (33) umfaßt.

15. Trockenabziehetikettmehrschichtenverbund nach Anspruch 14, wobei die Stirnkonstruktion (1) zusätzlich eine an die Haftklebeschicht (12) anliegende Polyesterschicht (15), eine an die Polyesterschicht (15) anliegende Haftklebeschicht (14) und eine an die Haftklebeschicht (14) anliegende Silikontrennschicht (13) umfaßt.

16. Trockenabziehetikettmehrschichtenverbund nach Anspruch 9, wobei in der Stirnkonstruktion die Haftklebeschicht (12) an die Einlageseite der Stirnschicht (11) anliegt, und die Stirnkonstruktion (1) zusätzlich eine an die Lackschicht (2) anliegende Trennschicht (17) umfaßt.

17. Trockenabziehetikettmehrschichtenverbund nach Anspruch 16, wobei die Trennschicht (17) eine Wachsschicht ist.

18. Trockenabziehetikettmehrschichtenverbund nach Anspruch 17, wobei die Stirnkonstruktion (1) zusätzlich eine an die Wachsschicht (17) anliegende Poyesterschicht (16) umfaßt, und die Einlagekonstruktion (3) zusätzlich eine an die Lackschicht (2) anliegende Haftklebeschicht (36) umfaßt.

19. Trockenabziehetikettmehrschichtenverbund nach einem der vorhergehenden Ansprüche, wobei die Stirnschicht (11) und die Einlageschichten (31) und (37) dieselben oder verschieden sind und aus einem Material, aus der Gruppe umfassend Papier und Kunststoffolie ausgewählt, hergestellt sind.

20. Trockenabziehetikettmehrschichtenverbund nach Anspruch 19, wobei die Kunststoffolie aus einem Polymer, aus der Gruppe umfassend Polyolefine und Polyester ausgewählt, hergestellt ist.

21. Trockenabziehetikettmehrschichtenverbund nach Anspruch 20, wobei die Kunststoffolie aus Polyethylen Terephthalat hergestellt ist.

22. Trockenabziehetikettmehrschichtenverbund nach einem der vorhergehenden Ansprüche, wobei die Polyesterschichte (15), (16) und (37) aus Polyethylen Terephthalat hergestellt sind.

23. Trockenabziehetikettmehrschichtenverbund nach einem der vorhergehenden Ansprüche, wobei der Haftkleber in den Haftklebeschichten (12), (14) und (36) aus einer Gruppe umfassend auf Acrylstoff basierte Kleber und auf Gummi basierte Kleber ausgewählt ist.

## Revendications

1. Laminé pour étiquettes pelliculable à sec comprenant un élément de face (1), une couche adhésive pelliculable à sec (2) et un élément de couverture (3), successivement, dans lequel ledit élément de face (1) comprend une couche de face (11) et une couche adhésive sensible à la pression (12), ledit élément de couverture (3) comprend une couche de couverture (31) et ladite couche adhésive pelliculable à sec (2) est une couche adhésive non sensible à la pression qui contient un ou plusieurs polymères et/ou copolymères, et/ou dérivés desdits un ou plusieurs polymères et/ou copolymères, dont le module de conservation E' est supérieur à 1 x 10⁷ Pa à une température de 10 à 50°C.

2. Laminé pour étiquettes pelliculable à sec selon la revendication 1, dans lequel lesdits un ou plusieurs polymères sont choisis dans un groupe comprenant les poly(méth)acrylates, les polyesters, le polypropylène, les polyamides, les polyuréthannes, les polymères vinyliques, les caoutchoucs au styrène-butadiène et les composés poly(vinylhydroxy).

3. Laminé pour étiquettes pelliculable à sec selon la revendication 2, dans lequel lesdits un ou plusieurs polymères comprennent des poly(méth)acrylates.

4. Laminé pour étiquettes pelliculable à sec selon l'une quelconque des revendications précédentes, dans lequel, dans ledit élément de face (1), ladite couche adhésive sensible à la pression (12) est adjacente à ladite couche adhésive non sensible à la pression (2) et ledit élément de couverture (3) comprend en outre une couche de couchage antiadhésive (32) adjacente à ladite couche adhésive non sensible à la pression (2).

5. Laminé pour étiquettes pelliculable à sec selon la revendication 4, dans lequel ladite couche de couchage antiadhésive (32) est une couche de couchage antiadhésive au silicone.

6. Laminé pour étiquettes pelliculable à sec selon la revendication 5, dans lequel le poids de silicone par unité de surface dans ladite couche de couchage antiadhésive au silicone (32) est compris dans la gamme de 0,01 à 2,00 g/m².

7. Laminé pour étiquettes pelliculable à sec selon la revendication 5 ou 6, dans lequel ladite couche de couchage antiadhésive au silicone (32) comprend un agent de contrôle de couchage d'un poids par unité de surface jusqu'à 100% en poids par rapport au poids de silicone par unité de surface.

8. Laminé pour étiquettes pelliculable à sec selon l'une quelconque des revendications 5 à 7, dans lequel ledit élément de couverture (3) comprend en outre une couche de couverture (37) adjacente à ladite couche de couchage antiadhésive au silicone (32), une couche adhésive sensible à la pression (36) adjacente à ladite couche de couverture (37) et une couche de couchage antiadhésive au silicone (33) adjacente à ladite couche adhésive sensible à la pression (36).

9. Laminé pour étiquettes pelliculable à sec selon la revendication 2, dans lequel ladite couche adhésive non sensible à la pression (2) est une couche de vernis qui comprend des polyuréthannes.

10. Laminé pour étiquettes pelliculable à sec selon la revendication 9, dans lequel, dans ledit élément de face (1), ladite couche adhésive sensible à la pression (12) est adjacente à ladite couche de vernis (2) et ledit élément de couverture (3) comprend en outre une couche de couchage antiadhésive (32) adjacente à ladite couche de vernis (2).

11. Laminé pour étiquettes pelliculable à sec selon la revendication 10, dans lequel ladite couche de couchage antiadhésive (32) est une couche de cire.

12. Laminé pour étiquettes pelliculable à sec selon la revendication 11, dans lequel ledit élément de face (1) comprend en outre une couche de couchage antiadhésive au silicone (13) adjacente à ladite couche adhésive sensible à la pression (12).

13. Laminé pour étiquettes pelliculable à sec selon la revendication 11, dans lequel ledit élément de couverture (3) comprend en outre une couche de polyester (37) adjacente à ladite couche de cire (32) et une couche adhésive sensible à la pression (36) adjacente à ladite couche de polyester (37).

14. Laminé pour étiquettes pelliculable à sec selon la revendication 13, dans lequel ledit élément de couverture (3) comprend en outre une couche de couchage antiadhésive au silicone (33) adjacente à ladite couche adhésive sensible à la pression (36).

15. Laminé pour étiquettes pelliculable à sec selon la revendication 14, dans lequel ledit élément de face (1) comprend en outre une couche de polyester (15) adjacente à ladite couche adhésive sensible à la pression (12), une couche adhésive sensible à la pression (14) adjacente à ladite couche de polyester (15) et une couche de couchage antiadhésive au silicone (13) adjacente à ladite couche adhésive sensible à la pression (14).

16. Laminé pour étiquettes pelliculable à sec selon la revendication 9, dans lequel, dans ledit élément de face (1), ladite couche adhésive sensible à la pression (12) est adjacente au côté couverture de ladite couche de face (11), et ledit élément de face (1) comprend en outre une couche de couchage antiadhésive (17) adjacente à ladite couche de vernis (2).

17. Laminé pour étiquettes pelliculable à sec selon la revendication 16, dans lequel ladite couche de couchage antiadhésive (17) est une couche de cire.

18. Laminé pour étiquettes pelliculable à sec selon la revendication 17, dans lequel ledit élément de face (1) comprend en outre une couche de polyester (16) adjacente à ladite couche de cire (17) et ledit élément de couverture (3) comprend en outre une couche adhésive sensible à la pression (36) adjacente à ladite couche de vernis (2).

19. Laminé pour étiquettes pelliculable à sec selon l'une quelconque des revendications précédentes, dans lequel ledit élément de face (11) et lesdits éléments de couverture (31) et (37) sont les mêmes ou sont différents et sont composés d'un matériau choisi dans un groupe comprenant film de plastique et papier.

20. Laminé pour étiquettes pelliculable à sec selon la revendication 19, dans lequel ledit film plastique est composé d'un polymère choisi dans un groupe comprenant les polyoléfines et les polyesters.

21. Laminé pour étiquettes pelliculable à sec selon la revendication 20, dans lequel ledit film plastique est composé de polyéthylène téréphtalate.

22. Laminé pour étiquettes pelliculable à sec selon l'une quelconque des revendications précédentes, dans lequel lesdites couches de polyester (15), (16) et (37) sont composées de polyéthylène téréphtalate.

23. Laminé pour étiquettes pelliculable à sec selon l'une quelconque des revendications précédentes, dans lequel l'adhésif sensible à la pression dans lesdites couches adhésives sensibles à la pression (12), (14) et (36) est choisi dans un groupe comprenant les adhésifs à base d'acrylique et les adhésifs à base de caoutchouc.
